# EUROPÄISCHE PATENTSCHRIFT

(11) **EP 3 944 751 B1**
(45) Veröffentlichungstag und Bekanntmachung des Hinweises auf die Patenterteilung: **26.06.2024**
(21) Anmeldenummer: 21186612.4
(22) Anmeldetag: 20.07.2021
(51) Int. Cl.: A01D 34/66, A01D 34/82, A01B 63/114

(54) **STEUERUNGSSYSTEM FÜR EIN LANDWIRTSCHAFTLICHES ZUGGESPANN AUS EINEM ZUGFAHRZEUG UND EINEM MÄHWERK, MÄHWERK UND ZUGGESPANN**
CONTROL SYSTEM FOR AN AGRICULTURAL VEHICLE SET COMPRISING A TRACTOR AND A MOWER, MOWER AND VEHICLE SET
SYSTÈME DE COMMANDE POUR UN TRAIN AGRICOLE COMPOSÉ D'UN VÉHICULE TRACTEUR ET D'UNE BARRE DE COUPE, BARRE DE COUPE ET TRAIN

(30) Priorität: 29.07.2020 DE 102020119957
(43) Veröffentlichungstag der Anmeldung: 02.02.2022
(73) Patentinhaber: CLAAS Saulgau GmbH, 88348 Bad Saulgau (DE)
(72) Erfinder: Ober, Martin, 78736 Epfendorf-Trichtingen (DE); Knupfer, Fabian, 88444 Ummendorf (DE); Berger, Matthias, 88284 Wolpertswende (DE)

(56) Entgegenhaltungen:
- EP-A1- 3 311 641
- WO-A1-2013/026661
- DE-A1- 10 140 383
- DE-A1- 10 227 484
- US-A1- 2020 128 717

## Beschreibung

Die Erfindung betrifft ein Steuerungssystem für ein landwirtschaftliches Zuggespann aus einem Zugfahrzeug und einem Mähwerk. Des Weiteren betrifft die Erfindung ein Mähwerk und ein Zuggespann. Ferner betrifft die Erfindung ein Verfahren zum Kalibrieren eines Steuerungssystems.

Aus DE 101 40 383 A1 ist eine Vorrichtung zur Steuerung oder Regelung der Lage eines an einer Dreipunkt-Geräteanbaueinrichtung eines Schleppers angebauten Anbaugerätes bekannt, wobei ein am Schlepper anbaubarer Neigungssensor vorgesehen ist, durch den die Neigung des Schleppers relativ zu einer horizontalen Ebene messbar ist, und am Anbaugerät ein weiterer Neigungssensor vorgesehen ist, durch den die Neigung des Anbaugerätes relativ zu einer horizontalen Ebene messbar ist, und wobei eine Steuerungs- bzw. Regelungseinheit vorgesehen ist, mit welcher beide Neigungssensoren verbunden sind, und die Aufhebung des Ausgleichs einer Neigungsveränderung mittels einer Differenzbildung zwischen der Neigung des Schleppers und der Neigung des Anbaugerätes geregelt wird.

Aus der Praxis ist es hinlänglich bekannt, dass beim Mähen von Erntegut, wie zum Beispiel von Gras, an ein landwirtschaftliches Zugfahrzeug, insbesondere an einen Schlepper, ein Mähwerk angehängt wird. Ein Gespann aus einem landwirtschaftlichen Zugfahrzeug und einem Mähwerk wird auch als landwirtschaftliches Zuggespann bezeichnet. Um das zu mähende Erntegut mit hinreichender Qualität zu mähen, muss für Mähorgane des Mähwerks eine definierte Schnitthöhe eingestellt werden. Die Einstellung einer solchen definierten Schnitthöhe ist bislang aufwendig und fehleranfällig, da der Fahrer nach jeder Verstellung der Oberlenkerlänge absteigen und die Schnitthöhe messen muss, weil diese aus der Fahrerkabine des Zugfahrzeugs nicht einschätzbar ist. Insbesondere bereitet es dann Schwierigkeiten eine exakte definierte Schnitthöhe für die Mähorgane des Mähwerks einzustellen, wenn das landwirtschaftliche Zuggespann in einer Neigung, wie zum Beispiel an einer Steigung oder an einem Gefälle, betrieben wird. Es besteht Bedarf daran, eine Schnitthöhe für Mähorgane eines an ein landwirtschaftliches Zugfahrzeug angehängten Mähwerks insbesondere auch dann einfach und zuverlässig einzustellen, wenn das landwirtschaftliche Zuggespann in einer Neigung betrieben wird.

Die WO 2013/02661 A1 offenbart ein Steuerungssystem für ein landwirtschaftliches Zugfahrzeug mit einem an das landwirtschaftliche Zugfahrzeug angehängten Anhängegerät. Beim Anhängegerät handelt es sich um einen Grubber. Aus der WO 2013/026661 A1 ist es bekannt, dass ein erster Winkelsensor am Zugfahrzeug und ein zweiter Winkelsensor am Grubber montiert ist. Beide Winkelsensoren stellen einem Steuergerät des Zugfahrzeugs Messwerte bereit. Abhängig von den Messwerten dieser Winkelsensoren kann eine Neigung des Grubbers oder des Zugfahrzeugs ermittelt werden.

Hiervon ausgehend liegt der vorliegenden Erfindung die Aufgabe zugrunde, ein neuartiges Steuerungssystem für ein landwirtschaftliches Zuggespann, bestehend aus einem Zugfahrzeug und einem Mähwerk, ein Verfahren zum Kalibrieren des Steuerungssystems, ein Mähwerk und ein Zuggespann zu schaffen.

Diese Aufgabe wird durch ein Steuerungssystem nach Anspruch 1 gelöst.

Erfindungsgemäß umfasst das Steuerungssystem einen ersten Neigungssensor, der am Mähwerk montierbar ist und einen ersten Neigungswinkel erfasst, einen zweiten Neigungssensor, der am Zugfahrzeug montierbar ist und einen zweiten Neigungswinkel erfasst, und ein Steuergerät, das den ersten Neigungswinkel vom ersten Neigungssensor und den zweiten Neigungswinkel vom zweiten Neigungssensor empfängt und abhängig von einer Ist-Winkeldifferenz zwischen dem ersten Neigungswinkel und dem zweiten Neigungswinkel eine Ist-Schnitthöhe des Mähwerks ermittelt. Mit der Erfindung wird erstmals vorgeschlagen, dass abhängig von den Neigungswinkeln, die mithilfe von zwei Neigungssensoren erfasst werden, eine Ist-Schnitthöhe des Mähwerks, nämlich von Mähorganen des Mähwerks, ermittelt wird, und zwar abhängig von der Ist-Winkeldifferenz der beiden erfassten Neigungswinkel. So kann einfach und zuverlässig die Ist-Schnitthöhe erfasst und angepasst werden. Dies ist insbesondere auch dann möglich, wenn das Zuggespann an einer Steigung oder einem Gefälle betrieben wird.

Besonders bevorzugt ist das Steuergerät ein Teil des Mähwerks.

Nach einer vorteilhaften Weiterbildung des Steuerungssystems ermittelt das Steuergerät eine Stellgröße, über welche das Mähwerk relativ zum Zugfahrzeug derart verlagerbar ist, dass die Ist-Winkeldifferenz einer Soll-Winkeldifferenz und damit die Ist-Schnitthöhe des Mähwerks einer Soll-Schnitthöhe des Mähwerks angepasst wird. So kann die Ist-Schnitthöhe einfach und zuverlässig sowie automatisiert an die Soll-Schnitthöhe des Mähwerks angepasst werden.

Nach einer vorteilhaften Weiterbildung des Steuerungssystems ist der erste Neigungssensor Bestandteil des Mähwerks und am Mähwerk fest verbaut. Der zweite Neigungssensor ist Bestandteil des Mähwerks und am Zugfahrzeug lösbar montierbar, wobei der zweite Neigungssensor über ein Kabel an das Mähwerk angebunden und relativ zum Mähwerk zur Montage am Zugfahrzeug verlagerbar ist.

Es ist besonders bevorzugt, wenn sowohl der erste Neigungssensor als auch der zweite Neigungssensor Bestandteil des Mähwerks sind. Der erste Neigungssensor ist fest am Mähwerk verbaut, der zweite Neigungssensor des Mähwerks ist über ein Kabel an das Mähwerk angebunden und kann am Kabel hängend relativ zum Mähwerk verlagert werden, um den zweiten Neigungssensor an das Zugfahrzeug zu montieren oder leicht lösbar am Zugfahrzeug anzubringen. Bei einem Anhängevorgang kann der zweite Neigungssensor schnell und komfortabel vom Fahrer am Zugfahrzeug montiert bzw. angebracht werden. Am Zugfahrzeug sind keine fest installierten Neigungssensoren erforderlich. Der Fahrer muss keine Steckverbindungen kuppeln. Derartige Steckverbindungen können schnell verschmutzen und sind störanfällig.

Das Verfahren zum Kalibrieren des Steuerungssystems ist in Anspruch 4 definiert. Das Mähwerk ist in Anspruch 5 und das Zuggespann ist in Anspruch 9 oder Anspruch 10 definiert.

Nach einer vorteilhaften Weiterbildung des Mähwerks weist dasselbe eine Halterung für den zweiten Neigungssensor auf, über welchen der zweite Neigungssensor an eine Führungsschiene der Anhängevorrichtung des Zugfahrzeugs lösbar montierbar ist. Vorzugsweise weist die Halterung Magnete und Zentrierungsscheiben auf, wobei die Magnete die Halterung an der Führungsschiene halten, und wobei die Zentrierungsscheiben in eine Nut der Führungsschiene eingreifen und an die Breite der Nut angepasst sind. Über eine solche Haltevorrichtung kann der zweite Neigungssensor, der Bestandteil des Mähwerks ist, schnell und zuverlässig am Zugfahrzeug montiert oder angebracht werden, und zwar in einer stets reproduzierbaren gleichen Ausrichtung.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einem landwirtschaftliches Zuggespann aus einem Zugfahrzeug und einem Mähwerk;
- Fig. 2: ein Detail der Fig. 1 in perspektivischer Ansicht.;
- Fig. 3: ein Detail der Fig. 1, 2 in perspektivischer Ansicht.

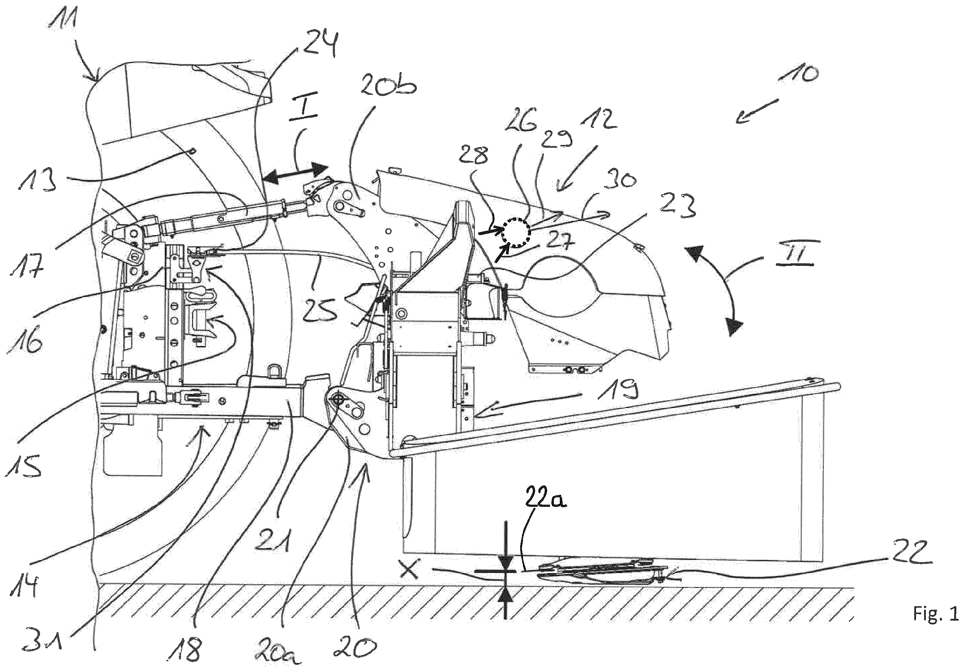

Fig. 1 zeigt einen Ausschnitt aus einem landwirtschaftlichen Zuggespann 10, welches ein Zugfahrzeug 11 und ein an das Zugfahrzeug 11 angehängtes Mähwerk 12 umfasst. Vom Zugfahrzeug 11 sind ein Hinterrad 13, eine als Drei-Punkt-Kraftheber ausgebildete Anhängevorrichtung 14, ein Zugmaul 15 sowie eine Führungsschiene 16 gezeigt. Die als Drei-Punkt-Kraftheber ausgebildete Anhängevorrichtung 14 weist einen Oberlenker 17 sowie zwei Unterlenker 18 auf. Der Drei-Punkt-Kraftheber ist auch unter der Bezeichnung Drei-Punkt-Hydraulik bekannt.

Das Mähwerk 12 verfügt über ein Mähwerktraggestell 19, welches eine Ankoppelvorrichtung 20 zum Anhängen des Mähwerks 12 an die Anhängevorrichtung 14 des Zugfahrzeugs 11 aufweist. Mit einem ersten Abschnitt 20a dieser Ankoppelvorrichtung 20 ist das Mähwerk 12 an die Unterlenker 18 der Anhängevorrichtung 14 des Zugfahrzeugs 11 ankoppelbar. Mit einem zweiten Abschnitt 20b dieser Ankoppelvorrichtung 20 ist das Mähwerk 12 an den Oberlenker 17 der Anhängevorrichtung 14 des Zugfahrzeugs 11 ankoppelbar.

Wie dem Pfeil I der Fig. 1 entnommen werden kann, ist der Oberlenker 17 ein- und ausfahrbar, insbesondere teleskopierbar. Bei dem Ein- und Ausfahren des Oberlenkers 17 in Richtung des Pfeils I wird das Mähwerk 12 um eine Achse 21 gekippt oder geneigt, die zwischen dem ersten Abschnitt 20a der Ankoppelvorrichtung 20 und den Unterlenkern 18 der Anhängevorrichtung 14 ausgebildet ist. Hierbei wird das Mähwerk 12 im Sinne des Doppelpfeils II der Fig. 1 gekippt oder geneigt. Wird der Oberlenker 17 weiter ausgefahren, so wird das Mähwerk 12 an seinem hinteren Ende nach unten geneigt. Dadurch dreht sich ein Messer 22a eines Mähorgans 22 nach oben, wodurch sich die Schnitthöhe X vergrößert. Wird der Oberlenker 17 weiter eingefahren also verkürzt, so wird das Mähwerk an seinem hinteren Ende nach oben geneigt also angehoben. Dadurch dreht sich das Messer 22a des Mähorgans 22 nach unten, wodurch sich die Schnitthöhe X verringert bzw. sich eine niedrigere Schnitthöhe einstellt.

Das Mähwerk 12 ist insbesondere ein Scheibenmähwerk.

Um nun die Schnitthöhe X des Mähwerks 12 bzw. der Mähorgane 22 des Mähwerks 12 einfach und zuverlässig auch dann einstellen zu können, wenn das landwirtschaftliche Zuggespann 10 an einer Steigung oder einem Gefälle betrieben wird - also das Zuggespann 10 insbesondere hangaufwärts oder hangabwärts fährt - wird ein Steuerungssystem für das landwirtschaftliche Zuggespann 10 vorgeschlagen, ebenso ein Mähwerk, ein landwirtschaftliches Zuggespann sowie ein Verfahren zum Kalibrieren des Steuerungssystems.

Das Steuerungssystem verfügt weiterhin über einen ersten Neigungssensor 23.

Der erste Neigungssensor 23 ist am Mähwerk 12 montiert und erfasst einen ersten Neigungswinkel, nämlich einen Neigungswinkel des Mähwerks 12. Der erste Neigungssensor 23 ist Bestandteil des Mähwerks 12 und am Mähwerk 12 fest verbaut, insbesondere am Mähwerktraggestell 19.

Das Steuerungssystem verfügt weiterhin über einen zweiten Neigungssensor 24.

Der zweite Neigungssensor 24 ist am Zugfahrzeug 11 montierbar und erfasst einen zweiten Neigungswinkel. Der zweite Neigungssensor 24 ist vorzugsweise auch Bestandteil des Mähwerks 12 und am Zugfahrzeug 11 lösbar montierbar. Hierzu ist der zweite Neigungssensor 24, der Bestandteil des Mähwerks 12 ist, über ein Kabel 25 an das Mähwerk 12 angebunden und relativ zum Mähwerk 12 verlagerbar, um den zweiten Neigungssensor 24 am Zugfahrzeug 11 zu montieren oder anzubringen.

Das Steuerungssystem verfügt neben den beiden Neigungssensoren 23 und 24 weiterhin über ein Steuergerät 26, welches am Mähwerk 12 angeordnet ist.

Das Steuergerät 26 des Mähwerks 12 empfängt den ersten Neigungswinkel vom ersten Neigungssensor 23 und den zweiten Neigungswinkel vom zweiten Neigungssensor 24. Ein Pfeil 27 visualisiert als Eingangsgröße für das Steuergerät 26 den vom ersten Neigungssensor 23 erfassten ersten Neigungswinkel, ein Pfeil 28 visualisiert als weitere Eingangsgröße für das Steuergerät 26 den vom zweiten Neigungssensor 24 ermittelten zweiten Neigungswinkel. Das Steuergerät 26 ist datentechnisch mit den Neigungssensoren 23, 24 verbunden.

Das Steuergerät 26 ermittelt abhängig von den beiden Neigungswinkeln der beiden Neigungssensoren 23, 24 eine Ist-Winkeldifferenz zwischen dem ersten Neigungswinkel des ersten Neigungssensors 23 und dem zweiten Neigungswinkel des zweiten Neigungssensors 24, wobei das Steuergerät 26 abhängig von dieser Ist-Winkeldifferenz und abhängig von der Geometrie des Mähwerks 12 eine Ist-Schnitthöhe, nämlich der Mähorgane 22 des Mähwerks 12, ermittelt. Das Steuergerät 26 kann die ermittelte Ist-Schnitthöhe als Ausgangsgröße 29 ausgeben und zum Beispiel über konventionelle Datenschnittstellen an ein Anzeige-Terminal - beispielsweise ein ISO-Bus-Terminal - übertragen, um einem Fahrer des Zugfahrzeugs 11 die Ist-Schnitthöhe darauf anzuzeigen.

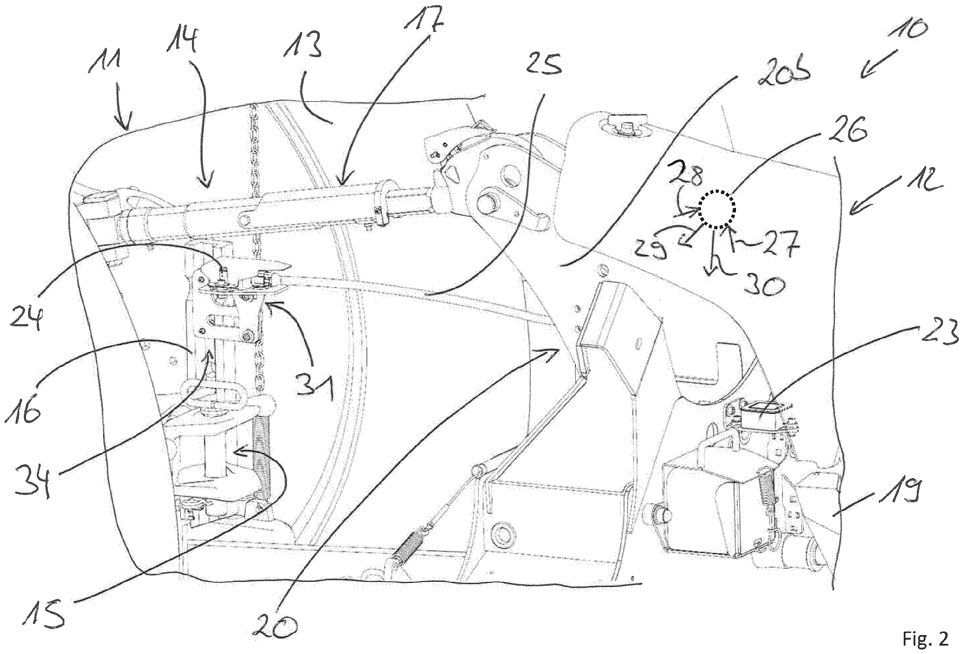

Weiterhin ist es möglich, dass das Steuergerät 26 die ermittelte Ist-Winkeldifferenz mit einer im Steuergerät 26 hinterlegten Soll-Winkeldifferenz und damit die Ist-Schnitthöhe des Mähwerks 12 mit einer Soll-Schnitthöhe desselben vergleicht, um abhängig hiervon eine Stellgröße, zum Beispiel für den Oberlenker 17 der Anhängevorrichtung 14 des Zugfahrzeugs 11, zu generieren, mithilfe derer der Oberlenker 17 derart ansteuerbar und das Mähwerk 12 derart relativ zum Zugfahrzeug 11 verlagerbar ist, dass die Ist-Winkeldifferenz der Soll-Winkeldifferenz und damit die Ist-Schnitthöhe des Mähwerks 12 der Soll-Schnitthöhe des Mähwerks 12 automatisch angepasst wird. Für eine automatische Anpassung - d.h. für die Ansteuerung des Oberlenkers 17 durch das Steuergerät 26 des Mähwerks kann das Steuergerät 26 mit einem entsprechenden Steuergerät des Zugfahrzeugs 11 gekoppelt oder datentechnisch verbunden werden. Es ist jedoch auch möglich den Oberlenker 17 an die Ölversorgung des Mähwerks anzuschließen. In diesem Fall kann das Steuergerät 26 des Mähwerks den Oberlenker 17 selbst direkt ansteuern und eine Kopplung bzw. datentechnische Verbindung zu einem Steuergerät des Zugfahrzeugs 11 wird nicht benötigt. Fig. 1 und 2 visualisieren eine derartige Stellgröße als weiterer Ausgangsgröße 30 des Steuergeräts 26.

Wie bereits ausgeführt, ist der erste Neigungssensor 23 fest, insbesondere am Mähwerktraggestell 19 des Mähwerks 12, verbaut, wohingegen der zweite Neigungssensor 24 über das Kabel 25 an das Mähwerk 12 angebunden ist und relativ zum Mähwerk 12 verlagert werden kann, um den zweiten Neigungssensor 24 lösbar am Zugfahrzeug 11 zu montieren.

Im gezeigten, bevorzugten Ausführungsbeispiel verfügt das Mähwerk 12 über eine Halterung 31 für den zweiten Neigungssensor 24, über welche der zweite Neigungssensor 24 an der Führungsschiene 16 des Zugfahrzeugs 11 lösbar montiert werden kann. Die Halterung 31 für den zweiten Sensor 24 verfügt dabei im gezeigten Ausführungsbeispiel über einen ersten Abschnitt 31a und einen zweiten Abschnitt 31b. Der erste Abschnitt 31a dient im gezeigten Ausführungsbeispiel der Montage an der Führungsschiene 16 des Zugfahrzeugs 11, der zweite Abschnitt 31b dient der Aufnahme des zweiten Neigungssensors 24. Die Halterung 31 für den zweiten Neigungssensor 24 weist Magnete 32 und Zentrierscheiben 33 auf. Die Magnete 32 und Zentrierscheiben 33 greifen dabei im gezeigten Ausführungsbeispiel an dem ersten Abschnitt 31a der Halterung 31 an. Die Magnete 32 und Zentrierscheiben 33 sind zur Montage in eine Nut 34 der Führungsschiene 16 des Zugfahrzeugs 11 (siehe Fig. 2) einführbar, wobei die Magnete 32 die Halterung 31 und damit den zweiten Neigungssensor 24 an der Führungsschiene 16 halten, und wobei die Zentrierungsscheiben 33 an die Breite der Nut 34 angepasst sind, um die Halterung 31 exakt an der Führungsschiene 16 auszurichten und ein Verkippen derselben infolge eines Spiels zwischen den Zentrierungsscheiben 33 und der Nut 34 der Führungsschiene 16 zu vermeiden. So kann der zweite Neigungssensor 34 schnell und zuverlässig am Zugfahrzeug 11 montiert werden, und zwar in einer stets reproduzierbaren, gleichen Ausrichtung.

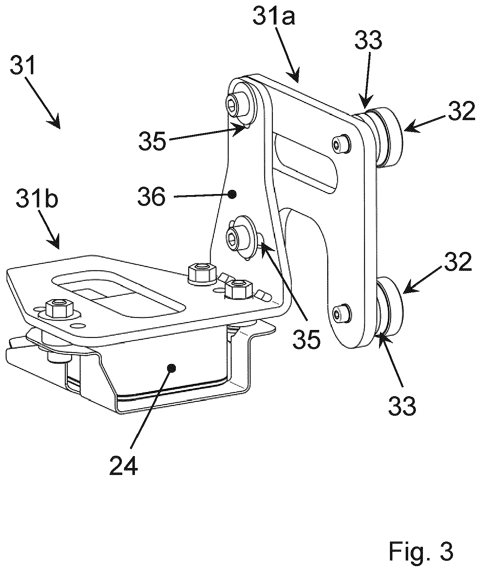

Wie Fig. 3 zeigt, können die beiden Abschnitte bzw. Teile 31a und 31b der Halterung 31 für den zweiten Neigungssensor 24 zueinander verlagert und ausgerichtet werden, wozu Langlöcher 35 dienen, die an einer Lasche 36 des Abschnitts 31b der Halterung 31 ausgebildet sind. Nach Lösen der sich durch diese Langlöcher 35 erstreckenden Befestigungsschrauben können die Abschnitte 31a und 31b der Halterung 31 relativ zueinander ausgerichtet werden. Dadurch kann die Halterung 31 vorteilhaft an den verfügbaren Bauraum am Zugfahrzeug 11 angepasst werden.

Statt der Führungsschiene 16 kann selbstverständlich auch ein anderer gleichbleibender Fixpunkt am Zugfahrzeug 11 zur Montage des zweiten Neigungssensors 34 vorgesehen werden.

Die Erfindung betrifft das oben beschriebene Steuerungssystem eines landwirtschaftlichen Zuggespanns sowie das oben beschriebene Mähwerk.

Ferner betrifft die Erfindung ein Zuggespann 10 bestehend aus dem Zugfahrzeug 11 und dem angehängten Mähwerk 12, wobei das landwirtschaftliche Zuggespann 10 das oben beschriebene Steuerungssystem aufweist und das Mähwerk 12 wie oben beschrieben ausgebildet ist.

Ferner betrifft die Erfindung ein Verfahren zum Kalibrieren des oben beschriebenen Steuerungssystems. Hierzu werden in einer ersten Position des Zuggespanns 10 erste Messwerte der beiden Neigungssensoren 23, 24 ermittelt, um eine erste Winkeldifferenz zu bestimmen. Nachfolgend werden in einer gegenüber der ersten Position des Zuggespanns 10 um 180° gedrehten oder gewendeten zweiten Position des Zuggespanns 10 zweite Messwerte der beiden Neigungssensoren 23, 24 ermittelt, um eine zweite Winkeldifferenz zu bestimmen. In der zweiten Position befindet sich das Zuggespann an derselben Stelle wie in der ersten Position, jedoch lediglich um 180° gewendet oder gedreht. Abhängig von diesen beiden Winkeldifferenzen bzw. den ersten und zweiten Messwerten kann dann das Steuerungssystem kalibriert werden. Durch diese Kalibrierung ist es nicht nötig, dass bei der Kalibrierung das Zuggespann auf einem ebenen Untergrund stehen muss. Auch ist es nicht erforderlich, dass Baugruppen des Steuerungssystems bei der Montage exakt zueinander ausgerichtet werden müssen.

### Bezugszeichenliste

- 10: Zuggespann
- 11: Zugfahrzeug
- 12: Mähwerk
- 13: Hinterrad
- 14: Anhängevorrichtung
- 15: Zugmaul
- 16: Führungsschiene
- 17: Oberlenker
- 18: Unterlenker
- 19: Mähwerktraggestell
- 20: Ankoppelverrichtung
- 20a: Abschnitt
- 20b: Abschnitt
- 21: Drehachse
- 22: Mähorgan
- 22a: Messer
- 23: Neigungssensor
- 24: Neigungssensor
- 25: Kabel
- 26: Steuergerät
- 27: Eingangsgröße
- 28: Eingangsgröße
- 29: Ausgangsgröße
- 30: Ausgangsgröße
- 31: Halterung
- 31a: Abschnitt
- 31b: Abschnitt
- 32: Magnet
- 33: Zentrierungsscheibe
- 34: Nut
- 35: Langloch
- 36: Lasche

## Patentansprüche

1. Steuerungssystem für ein landwirtschaftliches Zuggespann (10) bestehend aus einem Zugfahrzeug (11) und einem Mähwerk (12), welches über eine Ankoppelvorrichtung (20) an Unterlenker (18) und an einen Oberlenker (17) einer als Drei-Punkt-Kraftheber ausgebildeten Anhängevorrichtung (14) des Zugfahrzeugs (11) ankoppelbar ist
mit einem ersten Neigungssensor (23), der am Mähwerk (12) montierbar ist und einen ersten Neigungswinkel erfasst,
mit einem zweiten Neigungssensor (24), der am Zugfahrzeug (11) montierbar ist und einen zweiten Neigungswinkel erfasst,
mit einem Steuergerät (26), das datentechnisch mit den Neigungssensoren (23, 24) verbunden ist, den ersten Neigungswinkel vom ersten Neigungssensor (23) und den zweiten Neigungswinkel vom zweiten Neigungssensor (24) empfängt und abhängig von den beiden Neigungswinkeln eine Ist-Winkeldifferenz zwischen dem ersten Neigungswinkel des ersten Neigungssensors (23) und dem zweiten Neigungswinkel des zweiten Neigungssensors (24) ermittelt.
**dadurch gekennzeichnet, dass** das Steuergerät (26) abhängig von der Ist-Winkeldifferenz und abhängig von der Geometrie des Mähwerks (12) eine Ist-Schnitthöhe des Mähwerks (12) ermittelt.

2. Steuerungssystem nach Anspruch 1, **dadurch gekennzeichnet, dass** das Steuergerät (26) eine Stellgröße ermittelt, über welche das Mähwerk (12) derart relativ zum Zugfahrzeug (11) verlagerbar ist, dass die Ist-Winkeldifferenz einer Soll-Winkeldifferenz und damit die Ist-Schnitthöhe des Mähwerks (12) einer Soll-Schnitthöhe des Mähwerks (12) angepasst wird.

3. Steuerungssystem nach Anspruch 1 oder 2, **dadurch gekennzeichnet, dass**
der erste Neigungssensor (23) eingerichtet ist, am Mähwerk (12) fest verbaut zu werden,
der zweite Neigungssensor (24) am Zugfahrzeug (11) lösbar montierbar ist, wobei der zweite Neigungssensor (24) eingerichtet ist, über ein Kabel (25) an das Mähwerk (12) angebunden zu werden und relativ zum Mähwerk (12) zur Montage am Zugfahrzeug (11) verlagerbar ist.

4. Verfahren zum Kalibrieren eines Steuerungssystems nach einem der Ansprüche 1 bis 3, **dadurch gekennzeichnet, dass**
in einer ersten Position des Zuggespanns (10) erste Messwerte der beiden Neigungssensoren (23, 24) ermittelt werden;
in einer gegenüber der ersten Position des Zuggespanns (10) um 180° gedrehten oder gewendeten zweiten Position des Zuggespanns (10) zweite Messwerte der beiden Neigungssensoren (23, 24) ermittelt werden;
abhängig von den ersten und zweiten Messwerten das Steuerungssystem kalibriert wird.

5. Mähwerk (12),
mit einem Mähwerktraggestell (19), welches eine Ankoppelvorrichtung (20) zum Anhängen des Mähwerks (12) an eine Anhängevorrichtung (14) eines Zugfahrzeugs (11) aufweist,
mit mehreren am Mähwerktraggestell (19) aufgenommenen Mähorganen (22),
und mit einem Steuersystem nach einem der Ansprüche 1 bis 3,
wobei der erste Neigungssensor (23) fest am Mähwerktraggestell (19) verbaut ist;
wobei der zweite Neigungssensor (24) am Zugfahrzeug (11) montierbar ist;
wobei der zweite Neigungssensor (24) zur lösbaren Montage am Zugfahrzeug (11) relativ zum Mähwerktraggestell (19) verlagerbar ist.

6. Mähwerk nach Anspruch 5, **gekennzeichnet durch**
eine Halterung (31) für den zweiten Neigungssensor (24), über welche der zweite Neigungssensor (24) an eine Führungsschiene (16) des Zugfahrzeugs (11) lösbar montierbar ist.

7. Mähwerk nach Anspruch 6, **dadurch gekennzeichnet, dass**
die Halterung (31) Magnete (32) und Zentrierungsscheiben (33) aufweist,
die Magnete (32) eingerichtet sind, die Halterung (31) an der Führungsschiene (16) zu halten,
die Zentrierungsscheiben (33) eingerichtet sind, in eine Nut (34) der Führungsschiene (14) einzugreifen und an die Breite der Nut (34) angepasst sind.

8. Mähwerk nach Anspruch 7, **dadurch gekennzeichnet, dass**
die Halterung (31) einen Abschnitt (31b) zur Aufnahme des zweiten Neigungssensor (24) aufweist,
die Halterung (31) einen weiteren Abschnitt (31a) zur Aufnahme der Magnete (32) und Zentrierungsscheiben (33) aufweist,
die beiden Abschnitte (31a, 31b) relativ zueinander ausrichtbar sind.

9. Landwirtschaftliches Zuggespann (10), mit einem insbesondere als Schlepper ausgebildeten landwirtschaftlichen Zugfahrzeug (11) und einem an das Zugfahrzeug (11) angehängten Mähwerk (12), **gekennzeichnet durch** ein Steuerungssystem nach einem der Ansprüche 1 bis 3.

10. Landwirtschaftliches Zuggespann (10), mit einem insbesondere als Schlepper ausgebildeten landwirtschaftlichen Zugfahrzeug (11) und einem an das Zugfahrzeug (11) angehängten Mähwerk (12), insbesondere Zuggespann (10) nach Anspruch 9, **dadurch gekennzeichnet, dass** das Mähwerk nach einem der Ansprüche 5 bis 8 ausgebildet ist.

## Claims

1. Control system for an agricultural tractor-trailer assembly (10) consisting of a tractor vehicle (11) and a mower (12) which is able to be coupled via a coupling apparatus (20) to lower links (18) and to an upper link (17) of a towing apparatus (14) of the tractor vehicle (11), which towing apparatus is in the form of a threepoint linkage,
having a first inclination sensor (23) which is able to be mounted on the mower (12) and detects a first inclination angle,
having a second inclination sensor (24) which is able to be mounted on the tractor vehicle (11) and detects a second inclination angle,
having a control unit (26) which is connected to the inclination sensors (23, 24) for data purposes, receives the first inclination angle from the first inclination sensor (23) and the second inclination angle from the second inclination sensor (24) and uses the two inclination angles as a basis for ascertaining an actual angle difference between the first inclination angle from the first inclination sensor (23) and the second inclination angle from the second inclination sensor (24),
**characterized in that** the control unit (26) uses the actual angle difference and the geometry of the mower (12) as a basis for ascertaining an actual cutting height of the mower (12).

2. Control system according to Claim 1, **characterized in that** the control unit (26) ascertains a manipulated variable via which the mower (12) is able to be displaced relative to the tractor vehicle (11) in such a way that the actual angle difference is adapted to match a setpoint angle difference and in doing so the actual cutting height of the mower (12) is adapted to match a setpoint cutting height of the mower (12).

3. Control system according to Claim 1 or 2,
**characterized in that**
the first inclination sensor (23) is configured to be permanently installed on the mower (12),
the second inclination sensor (24) is able to be detachably mounted on the tractor vehicle (11), wherein the second inclination sensor (24) is configured to be connected to the mower (12) via a cable (25) and is able to be displaced relative to the mower (12) in order to be mounted on the tractor vehicle (11).

4. Method for calibrating a control system according to one of Claims 1 to 3, **characterized in that**
first measurement values from the two inclination sensors (23, 24) are ascertained in a first position of the tractor-trailer assembly (10);
second measurement values from the two inclination sensors (23, 24) are ascertained in a second position of the tractor-trailer assembly (10), which second position is rotated or turned by 180° with respect to the first position of the tractor-trailer assembly (10);
the first and second measurement values are used as a basis for calibrating the control system.

5. Mower (12)
having a mower support frame (19) which has a coupling apparatus (20) for attaching the mower (12) to a towing apparatus (14) of a tractor vehicle (11),
having a plurality of mowing elements (22) accommodated on the mower support frame (19),
and having a control system according to one of Claims 1 to 3,
wherein the first inclination sensor (23) is permanently installed on the mower support frame (19);
wherein the second inclination sensor (24) is able to be mounted on the tractor vehicle (11);
wherein the second inclination sensor (24) is able to be displaced relative to the mower support frame (19) in order to be detachably mounted on the tractor vehicle (11).

6. Mower according to Claim 5, **characterized by** a holder (31) for the second inclination sensor (24) via which the second inclination sensor (24) is able to be detachably mounted on a guide rail (16) of the tractor vehicle (11).

7. Mower according to Claim 6, **characterized in that** the holder (31) has magnets (32) and centring discs (33), the magnets (32) are configured to hold the holder (31) on the guide rail (16),
the centring discs (33) are configured to engage with a groove (34) of the guide rail (14) and are adapted to match the width of the groove (34).

8. Mower according to Claim 7, **characterized in that** the holder (31) has a portion (31b) for accommodating the second inclination sensor (24),
the holder (31) has a further portion (31a) for accommodating the magnets (32) and centring discs (33), the two portions (31a, 31b) are able to be aligned relative to one another.

9. Agricultural tractor-trailer assembly (10), having an agricultural tractor vehicle (11), which is in particular in the form of a tractor, and a mower (12), which is attached to the tractor vehicle (11), **characterized by** a control system according to one of Claims 1 to 3.

10. Agricultural tractor-trailer assembly (10), having an agricultural tractor vehicle (11), which is in particular in the form of a tractor, and a mower (12), which is attached to the tractor vehicle (11), in particular a tractor-trailer assembly (10) according to Claim 9, **characterized in that** the mower is designed according to one of Claims 5 to 8.

## Revendications

1. Système de commande pour attelage tracté agricole (10) composé d'un véhicule tracteur (11) et d'une barre de coupe (12), laquelle peut être accouplée, par le biais d'un dispositif d'accouplement (20), à un bras supérieur d'attelage (18) et à un bras inférieur d'attelage (17) d'un dispositif d'attelage (14) du véhicule tracteur (11) réalisé sous la forme d'un vérin hydraulique à trois points,
comprenant un premier capteur d'inclinaison (23), lequel peut être monté sur la barre de coupe (12) et détecte un premier angle d'inclinaison,
comprenant un deuxième capteur d'inclinaison (24), lequel peut être monté sur le véhicule tracteur (11) et détecte un deuxième angle d'inclinaison,
comprenant un contrôleur (26), qui est connecté en technique des données aux capteurs d'inclinaison (23, 24), reçoit le premier angle d'inclinaison en provenance du premier capteur d'inclinaison (23) et le deuxième angle d'inclinaison en provenance du deuxième capteur d'inclinaison (24) et, en fonction des deux angles d'inclinaison, détermine une différence angulaire réelle entre le premier angle d'inclinaison du premier capteur d'inclinaison (23) et le deuxième angle d'inclinaison du deuxième capteur d'inclinaison (24),
**caractérisé en ce que** le contrôleur (26) détermine une hauteur de coupe réelle de la barre de coupe (12) en fonction de la différence angulaire réelle et en fonction de la géométrie de la barre de coupe (12).

2. Système de commande selon la revendication 1, **caractérisé en ce que** le contrôleur (26) détermine une grandeur de commande par le biais de laquelle la barre de coupe (12) peut être déplacée par rapport au véhicule tracteur (11) de telle sorte que la différence angulaire réelle est adaptée à une différence angulaire de consigne et ainsi la hauteur de coupe réelle de la barre de coupe (12) à une hauteur de coupe de consigne de la barre de coupe (12).

3. Système de commande selon la revendication 1 ou 2,
**caractérisé en ce que**
le premier capteur d'inclinaison (23) est conçu pour être monté à demeure sur la barre de coupe (12),
le deuxième capteur d'inclinaison (24) peut être monté de manière amovible sur le véhicule tracteur (11), le deuxième capteur d'inclinaison (24) étant conçu pour être raccordé à la barre de coupe (12) par le biais d'un câble (25) et pouvant être déplacé par rapport à la barre de coupe (12) en vue du montage sur le véhicule tracteur (11) .

4. Procédé d'étalonnage d'un système de commande selon l'une des revendications 1 à 3, **caractérisé en ce que**
des premières valeurs mesurées des deux capteurs d'inclinaison (23, 24) sont déterminées dans une première position de l'attelage tracté (10) ;
des deuxièmes valeurs mesurées des deux capteurs d'inclinaison (23, 24) sont déterminées dans une deuxième position de l'attelage tracté (10), tournée ou retournée de 180° par rapport à la première position de l'attelage tracté (10) ;
le système de commande est étalonné en fonction des premières et des deuxièmes valeurs mesurées.

5. Barre de coupe (12),
comprenant un cadre porteur de barre de coupe (19), lequel possède un dispositif d'accouplement (20) destiné à atteler la barre de coupe (12) à un dispositif d'attelage (14) du véhicule tracteur (11),
comprenant plusieurs organes de coupe (22) accueillis au niveau du cadre porteur de barre de coupe (19),
et comprenant un système de commande selon l'une des revendications 1 à 3,
le premier capteur d'inclinaison (23) étant monté à demeure sur la barre de coupe (19) ;
le deuxième capteur d'inclinaison (24) pouvant être monté sur le véhicule tracteur (11) ;
le deuxième capteur d'inclinaison (24) pouvant être déplacé par rapport au cadre porteur de barre de coupe (19) en vue du montage sur le véhicule tracteur (11).

6. Barre de coupe selon la revendication 5,
**caractérisée par**
un élément d'attache (31) pour le deuxième capteur d'inclinaison (24), par le biais duquel le deuxième capteur d'inclinaison (24) peut être monté de manière amovible à un rail de guidage (16) du véhicule tracteur (11).

7. Barre de coupe selon la revendication 6,
**caractérisée en ce que**
l'élément d'attache (31) possède des aimants (32) et des rondelles de centrage (33),
les aimants (32) sont conçus pour maintenir l'élément d'attache (31) contre le rail de guidage (16),
les rondelles de centrage (33) sont conçues pour venir en prise dans une rainure (34) du rail de guidage (14) et sont adaptées à une largeur de la rainure (34).

8. Barre de coupe selon la revendication 7,
**caractérisée en ce que**
l'élément d'attache (31) possède une portion (31b) destinée à recevoir le deuxième capteur d'inclinaison (24),
l'élément d'attache (31) possède une portion supplémentaire (31a) destinée à recevoir les aimants (32) et les rondelles de centrage (33),
les deux portions (31a, 31b) peuvent être orientées l'une par rapport à l'autre.

9. Attelage tracté agricole (10), comprenant un véhicule tracteur (11) agricole notamment réalisé sous la forme d'un tracteur et une barre de coupe (12) attelée au véhicule tracteur (11), **caractérisé par** un système de commande selon l'une des revendications 1 à 3.

10. Attelage tracté agricole (10), comprenant un véhicule tracteur (11) agricole notamment réalisé sous la forme d'un tracteur et une barre de coupe (12) attelée au véhicule tracteur (11), notamment attelage tracté (10) selon la revendication 9, **caractérisé en ce que** la barre de coupe est configurée selon l'une des revendications 5 à 8.
